# EUROPEAN PATENT SPECIFICATION

(11) **EP 2 132 523 B1**
(45) Date of publication and mention of the grant of the patent: **13.11.2019**
(21) Application number: 08724325.9
(22) Date of filing: 02.04.2008
(51) Int. Cl.: G01B 11/03, G01B 21/04, G01B 11/00, G01B 11/24

(54) **METHOD AND DEVICE FOR EXACT MEASUREMENT OF OBJECTS**
VERFAHREN UND EINRICHTUNG ZUR EXAKTEN MESSUNG VON OBJEKTEN
PROCÉDÉ ET DISPOSITIF POUR UNE MESURE EXACTE D'OBJETS

(30) Priority: 03.04.2007 SE 0700830
(43) Date of publication of application: 16.12.2009
(73) Proprietor: Hexagon Technology Center GmbH, 9435 Heerbrugg (CH)
(72) Inventor: BO, PETTERSSON, London SW14 7DG (GB)
(74) Representative: Karlström, Lennart
(86) International application number: PCT/SE2008/050379
(87) International publication number: WO 2008/121073

(56) References cited:
- EP-A1- 0 840 880
- EP-A1- 1 434 028
- EP-A1- 1 434 028
- WO-A1-99/12082
- WO-A1-2006/024091
- DE-A1- 10 335 472
- DE-A1-102004 046 752
- FR-A1- 2 846 413
- US-A- 5 251 156
- US-A- 5 251 156
- US-A- 5 967 979
- US-A1- 2003 191 603
- US-A1- 2005 150 123

## Description

The present invention relates to a method and a device for the exact measurement of objects.

The use of what are known as jointed arms for a number of different measurement methods during measurement operations is known. Typical measurements are carried out with a contact measurement probe or with a mechanically attached measurement probe. Other measurement methods are carried out using laser sensors of various types. It is necessary in both cases to displace the arm between different measurement points in order to record the data required. The same is true also for other types of equipment that can be displaced, such as laser readers.

It is one purpose of the present invention to achieve a method and a device for measurement with the aid of manually operated and portable measurement equipment comprising a jointed arm, but equipment for which it is not necessary to displace the jointed arm for each measurement point.

The purpose of the invention described above is achieved with a method in which a camera is arranged on a jointed arm with a support that is immobile during the measurement in order to take two-dimensional images of the object that is to be measured and where the measurements are carried out based on the two-dimensional images taken with the camera and based on the displacements that are carried out by the jointed arm, and wherein the camera is provided with a laser measuring means for measuring the distance between the object and the camera so that the dimensions of the object is calculated based on the recorded displacements of the jointed arm together with the distance between the object and the camera in order to create a three-dimensional image of the object with the aid of photogrammetry and images taken from different views of the same object.

The purpose of achieving a device for measurement is solved according to the invention through the device arrangement comprising a camera arranged on a jointed arm with a support that is immobile during the measurement with which it is possible to take two-dimensional images of the object that is to be measured, and where such images and the displacements that are carried out by the jointed arm are used as a basis for measuring the object, wherein the camera is provided with a laser measuring means for measuring the distance between the object and the camera so that the dimensions of the object is calculated based on the recorded displacements of the jointed arm together with the distance between the object and the camera in order to create a three-dimensional image of the object with the aid of photogrammetry and images taken from different views of the same object.

FR 2 846 413 A1 describes a device for contact-free scanning of a 3-dimensional object, comprising an articulated arm consisting of at least two elements. An optical system for digitizing a surface of an object is arranged on the articulated arm, the optical system being a camera. The camera is connected to a computer and together with information about different spatial coordinates where images are taken the computer can process the data received to output an exact image of the object.

US 2005/150123 A1 shows an automated robotic measurement system, in which an articulated arm coordinate measuring machine having improved tolerance to external physical perturbations is obtained. It comprises a process for determining the position of the measuring arm, using encoders which detect the angular position of both the measuring arm and an exoskeletal frame relative to each other

DE 10 2004 046752 D1 shows a measurement system in which a picture of an object is taken by a sensor device comprising two cameras arranged on a fixed mutual distance from each otherto be able to decide the coordinates of curved edges of the object. This is a traditional photogrammetric solution, and is an essentially more complex solution than the one according to the present invention.

EP 1434028 A1 describes a method and apparatus for generating a combined image from partial images, especially of teeth. This device comprises a laser distance sensor for measuring a distance from the digital camera to the lateral dentition surface as an imaging distance, a memory that stores the partial images and the imaging distance when the partial images are taken, so that when using an image magnification converter the partial images can be combined into a combined image.

WO 2006/024091 A1 describes a method for automated 3D imaging. In this method a range measurement device is arranged to initiate and control processing of 2D images in order to produce a 3D image. The range measurement device may be the range sensor of a digital camera.

US patent No. 5,967,979 concerns a method and apparatus for photogrammetric assessment of biological tissue. In this method/apparatus vanishing points where photographic images of parallel lines on a target object intersect are determined. By using coordinate transformations of two separate oblique images of a wound and target plate three dimensional features of a wound may be measured.

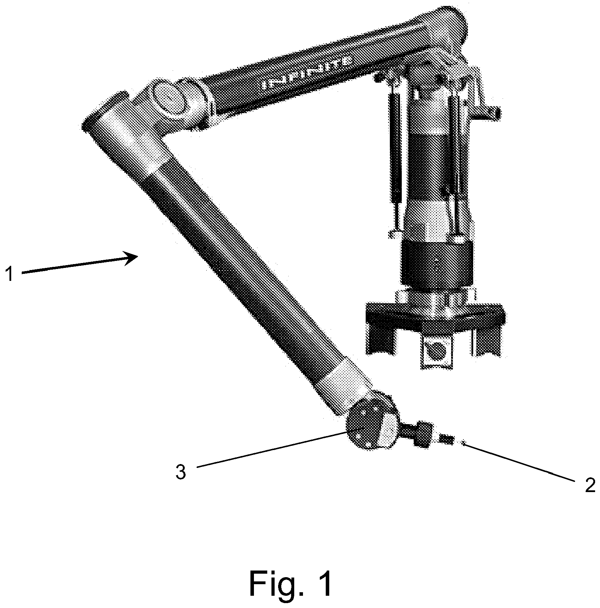

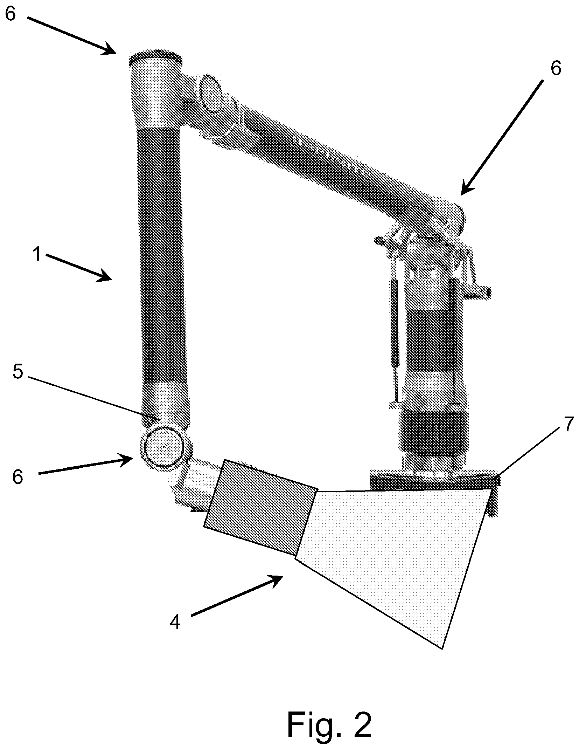

The invention will now be described in more detail in the form of a pair of non-limiting embodiments, and with the aid of the attached drawings, in which **Figure 1** shows a traditional measurement device comprising a jointed arm with a measurement probe arranged at the free end of the jointed arm, and **Figure 2** shows a measurement device according to the invention with a camera arranged at the end of a jointed arm.

A measurement device of known type is shown in Figure 1, comprising a jointed arm 1 with a measurement probe 2 arranged at its free end. In order to measure an object, not shown in the drawings, the measurement probe 2 is brought into contact with the object that is to be measured at a number of points, depending on the extent and form of the object. In order for it to be possible for the measurement probe to be brought into contact with these points, the jointed arm must be displaced, and it may also be necessary that the pivotable attachment 3 of the measurement probe 2 be pivoted. Not only does this take time, the displacements and the pivoting movements of the measurement probe 2 give rise to measurement errors.

According to the invention, a portable device arrangement is now suggested as an alternative that, as is shown in Figure 2, comprises, instead of a measurement probe for contact measurement, a camera 4 at the free end 5 of the jointed arm 1, in order to take with the camera 4 two-dimensional images of the object that is to be measured, and where the measurements are carried out based on the two-dimensional images and the displacements that are recorded by the jointed arm 1 while the camera 4 is being displaced. The camera 4 can be displaced with the aid of the jointed arm 1 to the desired position relative to the object that is to be measured, and at the same time sensors incorporated into the jointed arm can record not only changes in angle but also pivoting movements of the joints 6 of the arm.

In order to obtain a correct measurement value, it is required that a laser measuring means gives the exact distance from the camera to the object. The dimensions of the object that is to be measured can be calculated based on knowledge of the lens parameters of the camera. Since the dimensions and angles of the arms and joints 6 of the jointed arm are known, it is possible to calculate at all times the exact displacement of the attachment point of the camera 4 with the aid of sensors in the joints, and it is possible in this way to calculate with very high precision the dimensions of the object that is being measured with the aid of the jointed arm and the camera through knowledge of how the images are taken relative to each other. According to the invention, three-dimensional images are created by the use of photogrammetry on images on one part taken from different views.

Several advantages are achieved and possibilities opened by the use of a camera 4 instead of a contact measurement probe.

Thus can, for example, several images taken with the camera be put together to form a composite image such that an object larger than that which can be covered by the camera with a single image can be taken in order to form the basis for a measurement of the complete object.

It is also possible that the camera be provided with integral illumination in order to obtain an image of higher quality in order to facilitate the recording of points for measurement.

A measurement device according to the invention that is manually operated and portable can be easily transported between different locations at which it is necessary to carry out measurements, and since the support 7 of the arm 1 is held stationary during the measurement, it is possible to measure the dimensions of the object solely with the aid of the units that are integral to the arm and the camera 4. It is not necessary to carry out external calibration in order to obtain a reproducible and accurate measurement result.

The method according to the invention is particularly suitable for the measurement of two-dimensional objects such as, for example, punched sheet metal items.

The method is also admirably suitable for the measurement of holes.

## Claims

1. A method for the accurate measurement of objects, wherein a camera (4) is arranged on a manually operated portable jointed arm (1) mounted on a support (7) that is immobile during the measurement, in order to take two-dimensional images of the object that is to be measured and where the measurements are carried out based on the two-dimensional images taken with the camera (4) and based on displacements that are carried out by the jointed arm (1) during the measurements and recorded **characterised in that** the jointed arm (1) comprises within its joints (6) integral sensors arranged to record not only changes in angle, but also rotation of the joints (6) of the arm, and that the camera is provided with a laser measuring means for measuring the distance between the object and the camera, and that the dimensions of the object is calculated based on the recorded displacements of the jointed arm together with the distance between the object and the camera in order to create a three-dimensional image of the object with the aid of photogrammetry and images taken from different views of the same object.

2. The method according to claim 1, **characterised in that** measurement of large objects is carried out by the compilation of several images taken with the camera.

3. A device for the accurate measurement of objects, wherein the device comprises a camera (4) arranged on a manually operated portable jointed arm (1), with a support (7) that is immobile during the measurement, with which camera (4) two-dimensional images of the object that is to be measured can be taken and which images, together with displacements that are carried out by the jointed arm (1) and recorded, **characterised in that** the jointed arm (1) comprises within its joints (6) integral sensors arranged to record not only changes in angle, but also rotation of the joints (6) of the arm, and that the camera is provided with a laser measuring means measuring the distance between the object and the camera, and that the device is arranged to calculate the dimensions of the object based on the recorded displacements of the jointed arm together with the distance between the object and the camera in order to create a three-dimensional image of the object with the aid of photogrammetry and images taken from different views of the same object.

4. The device according to claim 3, **characterised in that** the camera (4) is arranged such that it can pivot at the free end (5) of the jointed arm, and **in that** sensors are arranged in order to record the pivoting movement of the camera (4) relative to the arm (1).

5. The device according to claim 3 or 4, **characterised in that** the arrangement comprises also an illumination arrangement in order to illuminate the object that is to be measured.

## Patentansprüche

1. Verfahren zum präzisen Vermessen von Objekten, wobei eine Kamera (4) an einem manuell betätigten, tragbaren Gelenkarm (1) angeordnet ist, der auf einem während der Messung unbeweglichen Träger (7) befestigt ist, um zweidimensionale Bilder des zu vermessenden Objekts aufzunehmen, und wobei die Messungen durchgeführt werden auf Basis der mit der Kamera (4) aufgenommenen zweidimensionalen Bilder und auf Basis von Verschiebungen, die durch den Gelenkarm (1) während der Messungen durchgeführt und aufgezeichnet werden, **dadurch gekennzeichnet, dass** der Gelenkarm (1) in seinen Gelenken (6) integrierte Sensoren aufweist, die so angeordnet sind, dass sie nicht nur Winkeländerungen, sondern auch die Drehung der Gelenke (6) des Arms erfassen, und dass die Kamera mit einem Lasermessmittel zum Messen des Abstandes zwischen dem Objekt und der Kamera versehen ist, und dass die Abmessungen des Objekts basierend auf den aufgezeichneten Verschiebungen des Gelenkarms zusammen mit dem Abstand zwischen dem Objekt und der Kamera berechnet werden, um mittels Photogrammetrie und aus verschiedenen Ansichten desselben Objekts aufgenommener Bilder ein dreidimensionales Bild des Objekts zu erzeugen.

2. Verfahren nach Anspruch 1, **dadurch gekennzeichnet, dass** die Messung großer Objekte durch die Zusammenstellung mehrerer mit der Kamera aufgenommener Bilder durchgeführt wird.

3. Vorrichtung zum präzisen Vermessen von Objekten, wobei die Vorrichtung eine Kamera (4) umfasst, die auf einem manuell betätigten, tragbaren Gelenkarm (1) angeordnet ist, mit einem Träger (7), der während der Messung unbeweglich ist, wobei mit der Kamera (4) zweidimensionale Bilder des zu messenden Objekts aufgenommen werden können, die zusammen mit durch den Gelenkarm (1) ausgeführten Verschiebungen aufgezeichnet werden, **dadurch gekennzeichnet, dass** der Gelenkarm (1) in seinen Gelenken (6) integrierte Sensoren aufweist, die so angeordnet sind, dass sie nicht nur Winkeländerungen, sondern auch die Drehung der Gelenke (6) des Arms erfassen, und dass die Kamera mit einem Lasermessmittel versehen ist, das den Abstand zwischen dem Objekt und der Kamera misst, und dass die Vorrichtung so angeordnet ist, dass sie die Abmessungen des Objekts basierend auf den aufgezeichneten Verschiebungen des Gelenkarms zusammen mit dem Abstand zwischen dem Objekt und der Kamera berechnet, um mittels Photogrammetrie und aus verschiedenen Ansichten desselben Objekts aufgenommener Bilder ein dreidimensionales Bild des Objekts zu erzeugen.

4. Vorrichtung nach Anspruch 3, **dadurch gekennzeichnet, dass** die Kamera (4) am freien Ende (5) des Gelenkarms schwenkbar angeordnet ist, und dass Sensoren angeordnet sind, um die Schwenkbewegung der Kamera (4) gegenüber dem Arm (1) zu erfassen.

5. Vorrichtung nach Anspruch 3 oder 4, **dadurch gekennzeichnet, dass** die Anordnung auch eine Beleuchtungsanordnung umfasst, um das zu messende Objekt zu beleuchten.

## Revendications

1. Procédé pour la mesure précise d'objets, dans lequel une caméra (4) est disposée sur un bras articulé mobile actionné manuellement (1) monté sur un support (7) qui est immobile pendant la mesure, de manière à prendre des images bi-dimensionnelles de l'objet à mesurer et dans lequel les mesures sont réalisées sur la base des images bi-dimensionnelles prises avec la caméra (4) et sur la base de déplacements réalisés par le bras articulé (1) pendant les mesures et enregistrés, **caractérisé en ce que** le bras articulé (1) comprend à l'intérieur de ses articulations (6) des capteurs intégrés agencés pour enregistrer non seulement les changements d'angle, mais également la rotation des articulations (6) du bras, et **en ce que** la caméra est équipée d'un moyen de mesure laser pour mesurer la distance entre l'objet et la caméra, et **en ce que** les dimensions de l'objet sont calculées sur la base des déplacements enregistrés du bras articulé avec la distance entre l'objet et la caméra, de manière à créer une image tridimensionnelle de l'objet à l'aide de la photogrammétrie et des images prises à partir de différentes vues du même objet.

2. Procédé selon la revendication 1, **caractérisé en ce que** la mesure d'objets de grande taille est réalisée par la compilation de plusieurs images prises avec la caméra.

3. Dispositif pour la mesure précise d'objets, dans lequel le dispositif comprend une caméra (4) agencée sur un bras articulé mobile actionné manuellement (1) avec un support (7) qui est immobile pendant la mesure, caméra (4) avec laquelle des images bi-dimensionnelles de l'objet à mesurer peuvent être prises et ces images, ainsi que les déplacements réalisés par le bras articulé (1) et enregistrés, **caractérisé en ce que** le bras articulé (1) comprend à l'intérieur de ses articulations (6) des capteurs intégrés agencés pour enregistrer non seulement les changements d'angle, mais également la rotation des articulations (6) du bras, et **en ce que** la caméra est équipée d'un moyen de mesure laser pour mesurer la distance entre l'objet et la caméra, et **en ce que** le dispositif est agencé pour calculer les dimensions de l'objet sur la base des déplacements enregistrés du bras articulé avec la distance entre l'objet et la caméra, de manière à créer une image tridimensionnelle de l'objet à l'aide de la photogrammétrie et des images prises à partir de différentes vues du même objet.

4. Dispositif selon la revendication 3, **caractérisé en ce que** la caméra (4) est agencée de manière à ce qu'elle puisse pivoter à l'extrémité libre (5) du bras articulé, et **en ce que** les capteurs sont disposés de manière à enregistrer le mouvement de pivotement de la caméra (4) par rapport au bras (1).

5. Dispositif selon la revendication 3 ou 4, **caractérisé en ce que** la disposition comprend également un dispositif d'éclairage de manière à éclairer l'objet à mesurer.
